# FASCICULE DE BREVET EUROPEEN

(11) **EP 3 004 216 B1**
(45) Date de publication et mention de la délivrance du brevet: **04.12.2019**
(21) Numéro de dépôt: 14733233.2
(22) Date de dépôt: 02.06.2014
(51) Int. Cl.: C08H 1/06, C08G 69/44, C09J 189/00, C09J 177/12, C09J 189/06

(54) **PROCÉDÉ DE PRÉPARATION D'UN POLYAMIDE ESTER DE GÉLATINE**
VERFAHREN ZUR HERSTELLUNG EINES POLYAMID-ESTERS VON GELATINE
METHOD FOR PRODUCING A POLYAMIDE-ESTER OF GELATIN

(30) Priorité: 03.06.2013 FR 1355060
(43) Date de publication de la demande: 13.04.2016
(73) Titulaire: Université de Picardie Jules Verne, 80025 Amiens Cedex 1 (FR)
(72) Inventeur: QUENEUDEC-T'KINT, Michèle, F-80025 Amiens (FR); HOUESSOU, Koffi, Justin, F-80025 Amiens (FR); MONTRELAY, Nicolas, F-80025 Amiens (FR)
(74) Mandataire: Plasseraud IP
(86) Numéro de dépôt international: PCT/FR2014/051303
(87) Numéro de publication internationale: WO 2014/195618

(56) Documents cités:
- EP-A1- 0 708 161
- GB-A- 576 228
- US-A- 2 363 892

## Description

L'invention concerne un procédé de préparation d'un polyamide ester, le polyamide ester obtenu ainsi que son utilisation dans le domaine des colles.

Ce polyamide ester trouvera une application particulière, mais non limitative, dans le domaine des colles à papiers, cartons, bois et notamment bois verts, surfaces minérales etc., et plus particulièrement le domaine des colles agrosourcées.

Par « agrosourcé », on entend ici un produit constitué en totalité ou en partie de composants issus de l'activité agricole, c'est-à-dire des productions végétales ou animales.

La gélatine est une protéine animale extraite après hydrolyse de matières premières riches en collagène telles que des peaux animales, des os, des cartilages, etc. Suivant le type d'hydrolyse, milieu acide ou milieu alcalin, on obtient les gélatines de type A ou B. Quel que soit le type d'hydrolyse, la gélatine est ensuite extraite à l'eau chaude. L'utilisation de la gélatine nécessite dans la quasi-totalité des cas une mise en solution préalable dans un liquide aqueux. L'absorption d'eau par la gélatine permet sa fusion. On obtient après refroidissement un gel colloïdal thermoréversible dont la température de fusion est voisine de 30°C.

L'utilisation de la gélatine dans le domaine des colles est connue depuis de nombreuses années. En général, ces colles ne développant leurs propriétés adhésives qu'après traitement thermique en présence d'eau, leur application se fait à chaud (environ 60°C). On parle alors de colles thermofusibles. Les gélatines se présentent sous forme solide, notamment sous forme de plaques, pastilles, perles ou poudres qu'il faut additionner d'eau et chauffer ou sous forme de pains contenant 20 à 40% d'eau qu'il suffit de chauffer. Les domaines d'utilisation sont principalement les arts graphiques et la transformation du papier et du carton.

Ces colles de gélatine résistent toutefois mal à l'humidité. Pour contrer cet inconvénient, elles ont par exemple été modifiées par ajout d'huile de lin en présence d'oxyde de plomb, par addition à chaud de gomme sandaraque, de térébenthine et d'alcool, de durcisseurs tels que tanins, alun, bichromate de potassium, formol, etc. Ces colles doivent être utilisées sur des supports bien secs. L'avantage de ces colles dites « fortes » est leur prise rapide et la possibilité de faire varier la viscosité en fonction des besoins. Elles ne peuvent cependant être préparées et appliquées qu'à chaud avec addition d'eau.
On connait depuis de nombreuses décennies des préparations de colles liquides à usage domestique et applicables à froid. Par exemple, le Dictionnaire universel théorique et pratique du commerce et de la navigation (Tome 1^{ier}-Paris-Librairie de Guillaumin et Cie-Rue Richelieu, 14-1859) cite la préparation de ces colles, qui consiste à chauffer un mélange composé d'une part de vinaigre concentré, d'un quart d'alcool éthylique et d'une petite quantité d'alun pour éviter la « décomposition », et à y ajouter une part de gélatine. Toutefois, les propriétés adhésives de ce produit liquide à froid sont faibles et sont adaptées uniquement aux ouvrages qui ne nécessitent pas l'utilisation de matières adhésives performantes.

Des compositions adhésives à base de collagène ont fait l'objet de nombreux travaux dans le domaine des colles tissulaires à usage chirurgical.

Il a ainsi été décrit dans la demande de brevet européen EP 0 466 383 au nom de Bausch & Lomb Incorporated, une composition adhésive à usage chirurgical constituée de collagène naturel réticulé dont la fluidité et la concentration, nécessaires compte tenu des applications chirurgicales envisagées, sont contrôlées par la proportion de réticulation dans la solution de collagène. Des tissus biologiques peuvent être liés par application du mélange précité, nécessitant cependant un chauffage préalable pour obtenir une fluidité permettant son application sur les tissus.

On connaît, par ailleurs, par la demande de brevet européen EP 0 253 715 au nom de Pasteur Merieux Serum et Vaccins et Imedex, un procédé de réticulation du collagène qui permet de le réticuler dans la masse et de manière homogène, sans addition covalente d'une molécule chimique. La réticulation est obtenue en effectuant une oxydation ménagée du collagène à l'aide d'une solution d'acide périodique ou de periodate de sodium à température ambiante et en milieu acide, puis en poursuivant le traitement à pH neutre ou basique. Ce procédé permet de préparer des produits collagéniques réticulés, non solubles (gels, films, poudres, lentilles ou encore produits de comblement osseux) présentant de bonnes caractéristiques mécaniques et de biodégradabilité, mais est inadapté à la préparation de produits liquides fluides.

On peut enfin citer la demande de brevet internationale WO97/29715 au nom de Fusion Medical Technologies qui propose des colles à base de gélatine commerciale et de glutaraldéhyde, appliquées à 50-80°C, mais qui présentent des dangers pour les tissus traités.

Il existe donc toujours un besoin de nouvelles colles ou compositions adhésives à base de gélatine.

Un but de l'invention est donc de fournir de nouvelles compositions adhésives à base de gélatine pouvant être facilement mises en œuvre à chaud ou à froid, à l'état solide ou à l'état de fluide plus ou moins visqueux.

Il est ainsi du mérite des inventeurs d'avoir trouvé qu'il était possible de préparer des compositions adhésives performantes à base de gélatine, pouvant notamment être mises en œuvre avec ou sans traitement thermique, grâce, en particulier, à la modification chimique de la gélatine en présence d'acide organique et de glycérol en présence d'un acide minéral agissant comme catalyseur de façon à obtenir un polyamide ester de gélatine.

Un objet de l'invention est donc un procédé de préparation d'un polyamide ester de gélatine comprenant au moins les étapes suivantes :
- préparer un mélange de gélatine, d'au moins un acide organique, de glycérol et d'au moins un acide minéral,
- soumettre ledit mélange à un traitement thermomécanique ou à un traitement thermique.

Ce procédé permet de préparer un polyamide ester de gélatine par réaction peptidique des groupements amine (-NH₂) de la gélatine avec l'acide organique et réaction d'estérification des groupements acide (-COOH) de la gélatine avec le glycérol. La réaction d'estérification peut concerner une, deux, voire les trois fonctions hydroxyles du glycérol. Le glycérol permet ainsi de réticuler les chaînes peptidiques de la gélatine entre elles.

Le polyamide ester de gélatine de l'invention est solide à température ambiante, thermofusible, sans ajout d'eau et il est soluble à froid, i.e. à température ambiante, sans traitement thermique, dans des solutions aqueuses.

Ce polyamide ester de gélatine est doublement avantageux en ce qu'il présente à la fois de bonnes propriétés adhésives à chaud, c'est-à-dire après l'application d'un traitement thermique permettant la fonte du polyamide ester sans mise en solution, et à froid après mise en solution. Le polyamide ester est obtenu sans avoir recours ni à des additifs nocifs tels que le formol ou le bichromate de potassium ni à des solvants organiques, notamment volatiles. Le polyamide ester de gélatine selon l'invention peut ainsi être utilisé tel quel en tant que colle thermofusible ou après dissolution, notamment dans un solvant aqueux ou dans de l'eau, sans présenter de risques de toxicité. Ceci est à la fois avantageux pour l'utilisateur et l'environnement.

Le procédé de l'invention présente de plus l'avantage de consommer peu d'énergie ce qui ne le rend pas seulement intéressant d'un point de vue économique mais aussi écologique.

Le polyamide ester de l'invention se conserve par ailleurs de nombreux mois à température ambiante sans perdre ses propriétés adhésives. Au sens de la présente invention, on entend par « température ambiante » une température comprise entre environ 20°C et environ 25°C.

Du fait de ses propriétés adhésives, le polyamide ester de l'invention trouve une application dans le collage de tous types de matières, tels que papiers, cartons, bois, plastiques et surfaces minérales. Lorsqu'il est formulé dans une composition adhésive aqueuse, son utilisation pour le collage de bois verts est particulièrement avantageuse.

Le terme « gélatine » désigne de la gélatine obtenue par tout type d'hydrolyse de tout type de collagène. Elle peut ainsi être préparée indifféremment à partir de n'importe quelle source connue par l'homme du métier, comme par exemple de la peau de porc ou de bovin, des os, des cartilages, etc. L'homme du métier saura adapter la quantité de gélatine suivant l'application visée. De manière avantageuse, la quantité de gélatine mise en œuvre dans le procédé de l'invention est de 30 à 90 % en poids sec, de préférence 45 à 75% en poids sec, par rapport au poids total de mélange gélatine, acide organique, glycérol.

De manière avantageuse, la gélatine est utilisée sous forme de poudre.

L'homme du métier saura adapter la quantité d'acide organique suivant l'application visée. De manière avantageuse, la quantité d'acide organique mise en œuvre dans le procédé de l'invention est de 5 à 35 % en poids, de préférence 10 à 35% en poids, par rapport au poids total du mélange gélatine, acide organique, glycérol.

Ledit au moins un acide organique est choisi dans le groupe constitué de l'acide acétique, l'acide propionique, l'acide butyrique et leurs mélanges. De bons résultats ont été obtenus avec de l'acide acétique. Cet acide présente par ailleurs l'avantage d'être bon marché et facilement accessible, notamment à partir de produits de départ issus de l'agriculture. L'acide acétique peut être employé à différentes concentrations ou sous forme de vinaigre. Dans un mode de réalisation préféré, on utilisera alors de l'acide acétique, notamment sous forme de vinaigre.

Le glycérol employé dans le procédé selon la présente invention peut provenir de toute source connue par l'homme du métier. Il peut ainsi être obtenu par exemple par synthèse à partir du propylène, être issu de la fermentation alcoolique du moût de raisin lors de la fabrication du vin ou être un sous-produit d'une réaction de saponification ou d'une réaction de trans-estérification d'huiles végétales lors de la fabrication de diester.

L'homme du métier saura adapter la quantité de glycérol suivant l'application visée. De manière avantageuse, la quantité de glycérol mise en œuvre dans le procédé de l'invention est de 5 à 35 % en poids, de préférence 10 à 35% en poids, par rapport au poids total du mélange gélatine, acide organique, glycérol.

L'acide minéral est utilisé en tant que catalyseur. Il est ainsi introduit dans le mélange en quantités catalytiques uniquement, quantités qui seront aisément déterminées par l'homme du métier.

L'acide minéral est avantageusement choisi parmi l'acide chlorhydrique et l'acide sulfurique. De préférence, il s'agit de l'acide sulfurique.

D'une manière générale, les proportions gélatine / acide organique / glycérol sont adaptées suivant l'application visée. De façon avantageuse, les proportions pondérales sont les suivantes :
- 30 à 90%, de préférence 45 à 75%, en poids sec de gélatine,
- 5 à 35%, de préférence 10 à 35%, en poids d'acide organique,
- 5 à 35%, de préférence 10 à 35%, en poids de glycérol,
les pourcentages étant exprimés par rapport au poids total du mélange gélatine, acide organique, glycérol.

Le mélange de la gélatine, dudit au moins un acide organique et du glycérol peut se faire dans des ordres différents, notamment :
- ajout dudit au moins un acide organique à la gélatine, puis ajout du glycérol, ou
- ajout du glycérol à la gélatine, puis ajout dudit au moins un acide organique.

Selon un mode particulier de l'invention, le mélange peut présenter en outre un ou plusieurs additifs visant notamment à modifier les critères organoleptiques de la composition adhésive, comme la couleur ou l'odeur. Un additif, de préférence naturel, notamment agrosourcé, peut par exemple être un agent colorant ou un agent aromatique.

Dans un mode de réalisation particulièrement avantageux, l'ensemble des composants du mélange utilisés dans le procédé sont issus de l'activité agricole, de façon à obtenir un produit agrosourcé. L'acide organique est ainsi avantageusement d'origine végétale, l'acide acétique sous forme de vinaigre étant préféré. Le glycérol, selon ce mode particulier de l'invention, est également obtenu par voie végétale, et peut notamment provenir de l'huile de colza, de l'huile de palme ou de noix de coco.

Tous les types de traitements thermiques ou thermomécaniques connus de l'homme du métier conviennent à la réalisation de l'étape de traitement thermo-mécanique ou thermique.

Le traitement thermique préféré est un traitement thermique par micro-ondes. L'homme du métier saura ajuster le temps de traitement et la puissance des micro-ondes, notamment en fonction de la quantité du mélange à traiter. L'étape de traitement thermique est avantageusement effectuée à une température inférieure à la température d'ébullition.

Le traitement thermomécanique peut par exemple consister en une extrusion ou encore en une thermo-compression du mélange et un maintien sous pression dudit mélange pendant une durée que l'homme du métier saura déterminer, notamment en fonction de la température et de la pression appliquées. Préférentiellement, une pression de 100 à 150 bars, de préférence encore de 130 à 150 bars, et une température de 70°C à 150°C, de préférence encore de 90°C à 100°C, sont appliquées.

Après refroidissement à température ambiante, le mélange durcit pour donner un matériau solide, déformable. Le polyamide ester obtenu reste thermofusible. Dans le cas d'un mélange gélatine, acide acétique, glycérol, le polyamide ester fond à environ 70°C sans ajout d'eau.

Un autre objet de l'invention est un polyamide ester de gélatine susceptible d'être obtenu par le procédé décrit ci-dessus.

Le polyamide ester solide obtenu selon l'invention peut être employé sous différentes formes selon la manière dont la composition adhésive sera utilisée. Le polyamide ester peut ainsi subir des traitements mécaniques tels qu'un broyage, afin de se présenter sous forme de poudre à granulométrie plus ou moins élevée, ou encore un découpage, permettant d'obtenir des éléments, comme par exemple des bâtonnets.

Du fait des propriétés adhésives du polyamide ester susceptible d'être obtenu selon le procédé précédemment décrit, la présente invention concerne également une composition adhésive comprenant un tel polyamide ester ainsi que le polyamide ester en tant que tel.

L'expression « composition adhésive comprenant un polyamide ester de gélatine » telle qu'utilisée ici englobe à la fois les compositions adhésives thermofusibles essentiellement ou entièrement constituées du polyamide ester de gélatine de l'invention et les compositions adhésives liquides obtenues par dissolution du polyamide ester dans un solvant, notamment aqueux ou de l'eau, avec éventuellement ajout d'un ou plusieurs additifs.

Les compositions adhésives de l'invention sont performantes dans le collage de tous types de matériaux tels que papiers, cartons, bois, plastiques et surfaces minérales et notamment dans le collage de bois verts et la fabrication de panneaux de fibres. Des panneaux de fibres peuvent par exemple être obtenus à partir d'un mélange d'une composition adhésive selon l'invention avec un ou plusieurs types de charges minérales et/ou organiques.

Dans un premier mode de réalisation particulier, le polyamide ester de gélatine de l'invention est utilisé en tant que colle thermofusible. L'invention concerne ainsi aussi l'utilisation du polyamide ester de l'invention en tant que colle thermofusible. Pour cette application, le polyamide ester de l'invention peut être utilisé sous toute forme appropriée, telle que par exemple bâtonnets, granulés, poudre, etc.

Lorsque le polyamide ester selon l'invention est utilisé en tant que colle thermofusible, celle-ci est notamment avantageuse pour le collage de bois verts et la fabrication de panneaux de fibres. Le polyamide, par exemple broyé, peut ainsi être déposé tel quel sur des surfaces à assembler, pressées ensuite à chaud. Le polyamide ester peut également subir un traitement thermique préalable afin d'être fondu puis étalé sur les surfaces à assembler, pressées ensuite à froid. Des panneaux de fibres peuvent ainsi être obtenus par mélange du polyamide ester, avantageusement sous forme de poudre, à un ou plusieurs types de charges minérales et/ou organiques et pressage du mélange obtenu à chaud, mais également par pressage à froid des charges minérales et/ou organiques mélangées au polyamide ester préalablement fondu. Les charges organiques peuvent notamment être des matières lignocellulosiques. Celles-ci sont avantageusement choisies dans le groupe constitué par les coproduits céréaliers, tels que produits de défibrage du lin ou du chanvre, pulpes de betterave, anas de lin, chènevotte, pailles, refus de silos, menues pailles de céréales ou de colza, de miscanthus, poussières de battage ou tout autre coproduit lignocellulosique poussant à l'état sauvage, issu des activités agricoles ou encore de l'exploitation forestière. Une fois le mélange refroidi, le panneau de fibres est peu sensible à la chaleur et à l'humidité ambiante.

Dans un autre mode de réalisation particulier, le polyamide ester de gélatine de l'invention est utilisé pour préparer, à froid, i.e. à température ambiante, une composition adhésive liquide, notamment aqueuse. Une telle composition adhésive liquide est particulièrement avantageuse pour le collage à froid de bois verts ou secs, pour l'élaboration à froid de panneaux de fibres ainsi que pour les assemblages à froid. Des panneaux de fibres peuvent ainsi être fabriqués par l'addition de la composition adhésive liquide à un ou plusieurs types de charges minérales et/ou organiques.

La composition de l'invention selon ce mode de réalisation se présente sous forme d'une solution dudit polyamide ester dans un solvant, notamment de l'eau ou un solvant aqueux tel qu'un mélange d'eau et d'au moins un acide organique et/ou de l'urée. De préférence, ledit au moins un acide organique est choisi dans le groupe constitué de l'acide acétique, l'acide propionique, l'acide butyrique et leurs mélanges. L'acide acétique peut être employé sous forme de vinaigre. De manière générale, les performances adhésives ainsi que la viscosité peuvent être variées en jouant sur la concentration en polyamide ester de la composition. L'ajout d'acide et/ou d'urée permet également d'adapter les propriétés rhéologiques, notamment la viscosité de la préparation. L'urée donnera notamment une composition adhésive plus liquide, pouvant par exemple être utilisée pour un collage par pulvérisation.

La composition adhésive liquide peut contenir en outre un ou plusieurs additifs comme des agents colorants et/ou agents aromatiques connus de l'homme du métier. De tels additifs peuvent ainsi être utilisés afin, notamment, de personnaliser la composition adhésive, par exemple en la colorant et/ou parfumant.

Dans ce mode de réalisation, le polyamide ester de l'invention est avantageusement broyé préalablement à la dissolution dans le solvant. De préférence, on l'utilisera sous forme de poudre ou de fins granulés. La dissolution peut, selon un mode particulier de l'invention, être effectuée dans une seringue sans aiguille, permettant ainsi d'appliquer la colle directement par ce moyen.

Du fait des bonnes propriétés de conservation du polyamide ester de l'invention, ce mode de réalisation est particulièrement avantageux puisqu'il permet la préparation de la composition adhésive sur site selon les besoins. Il est ainsi par exemple possible pour les écoles de prévoir un stock de polyamide ester broyé et de préparer la composition adhésive par simple ajout d'eau en fonction des activités de bricolage.

De plus, le liquide se conserve plusieurs mois, sans développement fongique.

L'invention est décrite plus en détail ci-après, à l'aide des figures et exemples suivants qui ne sont nullement limitatifs mais sont donnés à titre d'exemple uniquement.
La figure 1, citée dans l'exemple 5, représente l'évolution de la contrainte à la rupture en fonction de la concentration en Gel/G/AC1N du polyamide ester mis en solution avec de l'urée.
La figure 2, citée dans l'exemple 5, représente l'évolution de la contrainte à la rupture en fonction de la concentration en Gel/G/AC1N du polyamide ester mis en solution avec de l'acide acétique.

### EXEMPLE 1 :

Un mélange comprenant de la gélatine, du glycérol et de l'acide acétique 1N a été préparé dans les proportions pondérales 70 : 15 : 15 (gélatine : acide acétique : glycérol), la proportion de gélatine étant exprimée en poids sec, et selon les étapes décrites ci-après.

A la gélatine en poudre, on a ajouté l'acide acétique et on a homogénéisé.

On a ajouté à ce mélange quelques gouttes d'acide sulfurique concentré et on a homogénéisé à nouveau.

A ce mélange, on a ajouté le glycérol et on a homogénéisé à nouveau.

Un traitement thermomécanique a ensuite été appliqué. Le mélange a été placé dans un moule métallique de dimensions 100x100x5 mm placé sur le plateau d'une thermo-presse MIB Hydro 350kN. En se rapprochant, les plateaux de la presse compriment le mélange qui se ramollit et prend la forme de l'empreinte. Une pression de 150 bars et une température de 100 °C ont été appliquées.

La pièce a ensuite été dégagée après une période de refroidissement.

Le matériau obtenu durcit avec le temps mais reste déformable, pouvant ainsi subir des traitements mécaniques, comme un broyage ou un découpage, après durcissement. Le matériau fond vers 70°C sans ajout d'eau.

### EXEMPLE 2 :

Le polyamide ester de l'exemple 1, sous forme de poudre à granulométrie inférieure à 1 mm, a été introduit entre deux plaques de contreplaqué de 5mm d'épaisseur à raison de 0,02 g/cm². L'ensemble a été soumis à un pré-pressage durant la mise en chauffe de la presse puis à une pression d'environ 5 MPa à une température de 100 °C.

La prise s'effectue en moins d'une minute. Aucun décollement n'apparaît après refroidissement. Après six mois, la cohésion du matériau se maintient toujours et aucun changement n'est observé.

### EXEMPLE 3 :

Le polyamide ester, obtenu par le mode opératoire de l'exemple 1 puis broyé, a été soumis à un traitement thermique dans un four à micro-ondes domestique à 750 Watts afin de le rendre liquide.

Le polyamide ester fondu refait prise très rapidement.

Après étalement de 0,04g/cm² sur un support de deux plaques de contreplaqué, de 5mm d'épaisseur, des essais en traction/cisaillement ont été effectués suivant la norme NF T76-107 (Iso 4587) avec une machine de traction Shimadzu AG-10kNX équipée d'une cellule de 10kN.

Les résultats à 48h du module, de la contrainte à la rupture et de la déformation à la rupture sont comparés, dans le tableau 1 ci-dessous, à ceux obtenus pour une colle blanche pour pistolet du commerce, testée dans les mêmes conditions.

**Tableau 1**

| **Colle** | **Module (MPa)** | **Contrainte à la rupture (MPa)** | **Déformation à la rupture (%)** |
|---|---|---|---|
| Polyamide ester fondu par traitement thermique par micro-ondes | 1574±142 | 117±8 | 15,9±0,6 |
| Colle blanche pistolet du commerce | 1196±73 | 62±6 | 11,8±0,7 |

On note notamment un module nettement plus élevé et une contrainte deux fois plus importante pour le polyamide ester selon la présente invention. Après six mois, la cohésion du matériau se maintient toujours et aucun changement n'est observé.

### EXEMPLE 4 :

40g de polyamide ester de l'exemple 1 ayant subi un broyage ont été dissous dans 100g d'eau. L'ensemble a été maintenu à température ambiante jusqu'à dilution totale et obtention d'une solution saturée.

Des collages à froid avec la composition adhésive obtenue et avec des colles commerciales de type époxy et de type vinylique ont été effectués par étalement de 0,04g/cm² sur des supports de deux plaques de contreplaqué de 5mm d'épaisseur.

L'encollage à froid de la composition adhésive à base du polyamide ester obtenue est facile et la prise est terminée en 10 minutes.

Des essais en traction/cisaillement ont été effectués sur les trois échantillons en suivant la norme NF T76-107 (Iso 4587) avec une machine de traction Shimadzu AG-10kNX équipée d'une cellule de 10kN.

Les résultats des essais effectués, après maintien pendant 48 heures en atmosphère ambiante, sont présentés dans le tableau 2 suivant:

**Tableau 2**

| Type de colle | Module (MPa) | Contrainte à la rupture (MPa) | Déformation à la rupture (%) |
|---|---|---|---|
| Colle 1 du commerce type époxy | 1500±150 | 115±30 | 16±2,5 |
| Colle 2 du commerce type vinylique | 1590±150 | 152±15 | 21±1,5 |
| Polyamide ester + eau | 1594±110 | 97±23 | 13±2,7 |

Les valeurs obtenues pour le polyamide ester selon l'invention dissout dans de l'eau restent proches des valeurs obtenues pour les colles commerciales.

### EXEMPLE 5 :

Le polyamide ester de l'exemple 1, broyé afin d'obtenir une granulométrie de la poudre inférieure à 1 mm, a été dissous dans des solutions aqueuses d'urée (5 moles par L), et d'acide acétique (1N) dans différentes proportions. 0,04g/cm² des compositions adhésives obtenues ont ensuite été appliquées à froid sur des supports de deux plaques de contreplaqué de 5 mm d'épaisseur.

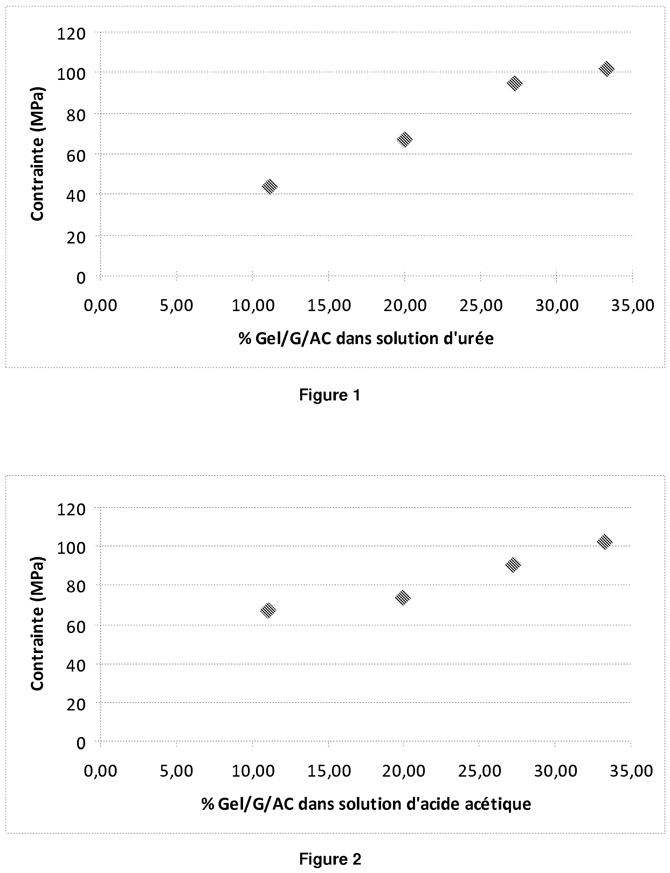

Des essais en traction/cisaillement ont été effectués sur les trois échantillons en suivant la norme NF T76-107 (Iso 4587) avec une machine de traction Shimadzu AG-10kNX équipée d'une cellule de 10kN. Les résultats des essais après 48h sont reportés sur les graphiques des figures 1 et 2 et dans le tableau 3.

Dans les deux cas, la contrainte à la rupture croit linéairement avec l'augmentation de la concentration en mélange gélatine/glycérol/acide acétique (Gel/G/AC1N).

**Tableau 3**

| | **Module (Mpa)** | | **Contrainte (Mpa)** | | **Déformation (%)** | | **Proportion de Gel/G/AC1N (% MS)** |
|---|---|---|---|---|---|---|---|
| | **Moyenne** | **Ecart type** | **Moyenne** | **Ecart type** | **Moyenne** | **Ecart type** | |
| 1- urée | 1591,76 | 64,83 | 101,84 | 6,38 | 7,87 | 1,05 | 33,33 |
| 2- urée | 1324,54 | 177,36 | 94,31 | 6,88 | 7,46 | 0,39 | 27,27 |
| 3- urée | 1336,99 | 104,25 | 67,14 | 7,95 | 5,25 | 0,69 | 20,00 |
| 4- urée | 1334,36 | 137,84 | 43,63 | 13,78 | 3,39 | 0,71 | 11,11 |
| 1- Acide acétique | 1621,93 | 138,9 | 102,07 | 7,09 | 6,99 | 0,41 | 33,33 |
| 2- Acide acétique | 1641,07 | 102,97 | 90,3 | 11,31 | 5,73 | 0,81 | 27,27 |
| 3- Acide acétique | 1544,74 | 175,45 | 73,72 | 7,92 | 5,03 | 0,76 | 20,00 |
| 4- Acide acétique | 1585,86 | 197,65 | 67,02 | 3,78 | 4,37 | 0,57 | 11,11 |

### EXEMPLE 6 :

Des assemblages de deux supports identiques de bois vert ont été effectués par étalement de 0,04 g/cm² d'une solution contenant 33,33% de polyamide ester (% en masse de matière sèche) de l'exemple 1 dissous à température ambiante dans une solution d'acide acétique 1N sur des supports résineux (Pin Douglas) et de feuillus (chêne). Des essais en traction/cisaillement ont été effectués en suivant la norme NF T76-107 (Iso 4587) avec une machine de traction Shimadzu AG-10kNX équipée d'une cellule de 10kN. Les résultats des essais de traction-cisaillement sont comparés à ceux d'une colle à bois du commerce (Pattex classic) et sont reportés dans le tableau 4.

**Tableau 4**

| **Type de colle** | **Module d'élasticité (MPa)** | **Contrainte à la rupture (MPa)** | **Type de bois** |
|---|---|---|---|
| Colle commerciale de type vinylique | 1500±172 | 249±27 | Chêne |
| | 1383±188 | 185±23 | Pin Douglas |
| Polyamide ester + acide acétique 1N | 1280±150 | 219±22 | Chêne |
| | 1476±239 | 226±30 | Pin Douglas |

### EXEMPLE 7 :

Des assemblages de deux supports carton identiques (grammage 250g/m²) ont été effectués par étalement de 0,04 g/cm² de polyamide ester de l'exemple 1 dissous à température ambiante dans une solution d'acide acétique 1N, à raison de 2g pour 8g de solution, et de polyamide ester dissous à température ambiante dans une solution d'urée à 5 moles par litre, à raison de 4g pour 8g de solution.

Des essais en traction/cisaillement ont été effectués en suivant la norme NF T76-107 (Iso 4587) avec une machine de traction Shimadzu AG-10kNX équipée d'une cellule de 10kN.

On observe une rupture du support avant celle de l'assemblage.

Naturellement, d'autres modes de mise en œuvre auraient pu être envisagés par l'homme du métier sans pour autant sortir du cadre de l'invention définie par les revendications ci-après.

### EXEMPLE 8 :

Un mélange de gélatine, acide acétique 1N et glycérol dans des proportions gélatine : acide acétique: glycérol de 50 : 32 : 18 a été effectué suivant le mode opératoire de l'exemple 1 puis soumis à un traitement thermique par micro-ondes durant 20s pour 8g de mélange. Le mélange liquide est utilisé pour coller des matières plastiques sur du béton cellulaire ou du placoplâtre. Des essais ont notamment été effectués avec des fils électriques gainés de PVC et des éléments de goulotte en PVC. Le mélange chaud peut être appliqué au pistolet, à la spatule ou au pinceau. Le temps de prise est de l'ordre de 1 min et l'adhérence est très bonne.

## Revendications

1. Procédé de préparation d'un polyamide ester comprenant au moins les étapes suivantes :
- préparer un mélange de gélatine, d'au moins un acide organique, de glycérol et d'au moins un acide minéral,
- soumettre ledit mélange à un traitement thermomécanique ou à un traitement thermique,
ledit au moins un acide organique étant choisi dans le groupe constitué de l'acide acétique, l'acide propionique, l'acide butyrique et leurs mélanges.

2. Procédé selon la revendication 1 dans lequel les proportions pondérales de gélatine, acide organique et glycérol sont les suivantes :
- 30 à 90% en poids sec de gélatine,
- 5 à 35%, en poids d'acide organique,
- 5 à 35% en poids de glycérol,
les pourcentages étant exprimés par rapport au poids total du mélange gélatine, acide organique, glycérol.

3. Procédé selon la revendication 1 ou 2 dans lequel l'acide organique est de l'acide acétique.

4. Procédé selon l'une quelconque des revendications 1 à 3 dans lequel le mélange est soumis à un traitement thermomécanique.

5. Procédé selon l'une quelconque des revendications 1 à 3 dans lequel le mélange est soumis à un traitement thermique par micro-ondes.

6. Polyamide ester de gélatine susceptible d'être obtenu par le procédé selon l'une quelconque des revendications 1 à 5.

7. Composition adhésive comprenant le polyamide ester de gélatine selon la revendication 6.

8. Composition adhésive selon la revendication 7, **caractérisée en ce qu'**elle se présente sous la forme d'une solution dudit polyamide ester.

9. Composition selon la revendication 8, **caractérisée en ce que** le solvant est de l'eau ou un mélange d'eau et d'au moins un acide organique et/ou de l'urée.

10. Utilisation du polyamide ester selon la revendication 6 en tant que colle thermofusible.

11. Utilisation selon la revendication 10 en mélange avec des charges lignocellulosiques pour la fabrication de panneaux de fibres.

12. Utilisation du polyamide ester selon la revendication 6 pour préparer une composition adhésive liquide.

13. Utilisation selon la revendication 12 **caractérisée en ce qu'**il s'agit d'une composition adhésive aqueuse.

## Patentansprüche

1. Verfahren zur Herstellung eines Polyamidesters, umfassend mindestens die folgenden Schritte:
- Herstellen eines Gemisches aus Gelatine, mindestens einer organischen Säure, Glycerin und mindestens einer Mineralsäure,
- Unterziehen des Gemisches einer thermomechanischen Behandlung oder einer Wärmebehandlung,
wobei die mindestens eine organische Säure ausgewählt ist aus der Gruppe bestehend aus Essigsäure, Propionsäure, Buttersäure und Gemischen davon.

2. Verfahren nach Anspruch 1, wobei die Gewichtsanteile von Gelatine, organischer Säure und Glycerin wie folgt sind:
- 30 bis 90 Trockengew.-% Gelatine,
- 5 bis 35 Gew.-% organische Säure,
- 5 bis 35 Gew.-% Glycerin,
wobei sich die Prozentangaben auf das Gesamtgewicht des Gemischs aus Gelatine, organischer Säure und Glycerin beziehen.

3. Verfahren nach Anspruch 1 oder 2, wobei die organische Säure Essigsäure ist.

4. Verfahren nach einem der Ansprüche 1 bis 3, wobei das Gemisch einer thermomechanischen Behandlung unterzogen wird.

5. Verfahren nach einem der Ansprüche 1 bis 3, wobei das Gemisch einer Wärmebehandlung mit Mikrowellen unterzogen wird.

6. Polyamidester von Gelatine, der gemäß dem Verfahren nach einem der Ansprüche 1 bis 5 erhalten werden kann.

7. Klebstoffzusammensetzung, umfassend den Polyamidester von Gelatine nach Anspruch 6.

8. Klebstoffzusammensetzung nach Anspruch 7, **dadurch gekennzeichnet, dass** sie in Form einer Lösung des Polyamidesters vorliegt.

9. Zusammensetzung nach Anspruch 8, **dadurch gekennzeichnet, dass** das Lösungsmittel Wasser oder ein Gemisch aus Wasser und mindestens einer organischen Säure und/oder Harnstoff ist.

10. Verwendung des Polyamidesters nach Anspruch 6 als Schmelzklebstoff.

11. Verwendung nach Anspruch 10 im Gemisch mit Lignocellulosefüllstoffen zur Herstellung von Faserplatten.

12. Verwendung des Polyamidesters nach Anspruch 6 zur Herstellung einer flüssigen Klebstoffzusammensetzung.

13. Verwendung nach Anspruch 12, **dadurch gekennzeichnet, dass** es sich um eine wässrige Klebstoffzusammensetzung handelt.

## Claims

1. Method for preparing a polyamide ester comprising at least the following steps:
- preparing a mixture of gelatine, at least one organic acid, glycerol and at least one mineral acid,
- submitting said mixture to a thermomechanical treatment or to a heat treatment,
said at least one organic acid being chosen in the group consisting of acetic acid, propionic acid, butyric acid and mixtures thereof.

2. Method according to claim 1 wherein the proportions by weight of gelatine, organic acid and glycerol are as follows:
- 30 to 90% by dry weight of gelatine,
- 5 to 35% by weight of organic acid,
- 5 to 35% by weight of glycerol,
the percentages being expressed with respect to the total weight of the gelatine, organic acid and glycerol mixture.

3. Method according to claim 1 to 2 wherein the organic acid is acetic acid.

4. Method according to any one of claims 1 to 3 wherein the mixture is subjected to a thermomechanical treatment.

5. Method according to any one of claims 1 to 3 wherein the mixture is subjected to a microwave heat treatment.

6. Gelatine polyamide ester obtainable by the method according to any one of claims 1 to 5.

7. Adhesive composition comprising the gelatine polyamide ester according to claim 6.

8. Adhesive composition according to claim 7, **characterised in that** it is presented in the form of a solution of said polyamide ester.

9. Composition according to claim 8, **characterised in that** the solvent is water or a mixture of water and at least one organic acid and/or urea.

10. Use of the polyamide ester according to claim 6 as a hot-melt adhesive.

11. Use according to claim 10 in a mixture with lignocellulosic fillers for the manufacture of fibreboard.

12. Use of the polyamide ester according to claim 6 to prepare a liquid adhesive composition.

13. Use according to claim 12 **characterised in that** it consists of an aqueous adhesive composition.
